# EUROPEAN PATENT SPECIFICATION

(11) **EP 3 754 248 B1**
(45) Date of publication and mention of the grant of the patent: **04.08.2021**
(21) Application number: 20167552.7
(22) Date of filing: 01.04.2020
(51) Int. Cl.: F21S 4/28, F21V 5/04, F21V 7/00, G02B 19/00, F21V 3/02, F21V 3/04, F21V 31/00, F21Y 103/10, F21Y 115/10

(54) **OPTICAL ELEMENT AND LIGHTING LAMP WITH THE SAME**
OPTISCHES ELEMENT UND BELEUCHTUNGSLAMPE DAMIT
ÉLÉMENT OPTIQUE ET LAMPE D'ÉCLAIRAGE LE COMPRENANT

(30) Priority: 19.06.2019 CN 201910530024
(43) Date of publication of application: 23.12.2020
(73) Proprietor: Self Electronics Co., Ltd., Ningbo City, Zhejiang 315103 (CN); SELF ELECTRONICS Germany GmbH, 51149 Köln (DE); Lin, Wanjiong, Ningbo City, Zhejiang 315103 (CN)
(72) Inventor: He, Zuping, Ningbo, 315103 (CN); Liu, Xiaoyun, Ningbo, 315103 (CN); Xu, Kai, Ningbo, 315103 (CN)
(74) Representative: 2K Patentanwälte Blasberg Kewitz & Reichel

(56) References cited:
- EP-A1- 2 924 333
- KR-A- 20140 064 189
- US-A1- 2017 084 802

## Description

### FIELD OF THE TECHNOLOGY

The present invention relates to the field of lighting technology, and in particular to an optical element and a lighting lamp with such an optical element.

### BACKGROUND OF THE INVENTION

With the popularization of LED lamps, LED lamps are used in more and more occasions, such as bedroom, kitchen, living room and other home lighting, as well as commercial lighting such as freezers, cold chain, shelves.

As a point light source, the light intensity distribution of an LED chip is fixed. However, in actual use, it needs to be focused properly or a uniform lighting over a large area is needed. For this reason, in the prior art, in order to achieve the required light intensity distribution, an optical element is generally arranged in the light emitting direction of the LED chip for light distribution.

With the development of lighting technology, new requirements have also been raised, such as the miniaturization of the volume, but at the same time, a uniform lighting over a large area is required. At present, the existing lighting lamps cannot meet these demands.

US 2017/084802 A1 discloses an optical element comprising a circular optical lens, wherein, in a cross-section, the optical lens comprises: a light source setting portion provided for setting the light source with a central axis; a light incident surface, disposed facing the light source setting portion, wherein incident light rays of the light source comprise small-angle light rays and large-angle light rays; two top reflection surfaces located opposite to the light incident surface and each disposed on opposite sides of the central axis, wherein the two ends of the two top reflection surfaces close to the light source setting portion are close to each other; two first light emitting surfaces arranged on either side of the two top surfaces in a direction perpendicular to the central axis, for emitting reflected light from the two top reflection surfaces on the same side; two second reflection surfaces located opposite to the light incident surface and each disposed on opposite sides of the central axis, wherein the two second reflection surfaces are angled outwards for refraction and partial reflection of the large-angle light rays; and two second light emitting surfaces, each disposed on either side of the central axis and each located between the second reflection surface and the first light emitting surface on the same side, for emitting reflected light from the second reflection surface on the same side.

The top reflection surfaces are not total reflective, but configured for coupling out a portion of incident light. Also, the second reflection surfaces are not total reflective, but configured for coupling out a portion of incident light. The outer rim of the optical lens, remote from the central axis, is a partially curved surface having a continuous curve of the inclination angle.

KR 2014 0064 189 A discloses an optical element comprising a circular optical lens, wherein, in a cross-section, the optical lens comprises: a light source setting portion provided for setting the light source with a central axis; a light incident surface, disposed facing the light source setting portion, wherein incident light rays of the light source comprise small-angle light rays and large-angle light rays; two first total reflection surfaces located opposite to the light incident surface and each disposed on opposite sides of the central axis, wherein the two ends of the two first total reflection surfaces close to the light source setting portion are close to each other; two first light emitting surfaces arranged on either side of the two first total reflection surfaces in a direction perpendicular to the central axis, for emitting reflected light from the two first total reflection surfaces on the same side; and two second light emitting surfaces located opposite to the light incident surface and each disposed on opposite sides of the central axis, wherein the two second light emitting surfaces are convexely curved outwards for refraction reflection of the large-angle light rays.

The optical element does not additionally comprise two second total reflection surfaces. Rather two second light emitting surfaces are configured for coupling out the large angle rays, wherein the outer rim of the optical lens, remote from the central axis, is a partially curved surface having a continuous curve of the inclination angle.

EP 2 924 333 A1 discloses a modular luminaire including an elongated profile, a plurality of LED-light sources and an optical element comprising a strip-shaped optical lens, wherein, in a cross-section perpendicular to a length direction, the optical lens comprises: a light source setting portion provided for setting the light source with a central axis; a light incident surface, disposed facing the light source setting portion, wherein incident light rays of the light source comprise small-angle light rays and large-angle light rays; two first total reflection surfaces located opposite to the light incident surface and each disposed on opposite sides of the central axis; and a flat top surface extending across the central axis, for coupling out light reflected by the two first total reflection surfaces. The optical element does not comprise additional total reflection surfaces.

### BRIEF SUMMARY OF THE INVENTION

It is an object of the present invention to provide an optical element enabling a uniform lighting over a large area. It is a further objection of the present invention to comprise a corresponding lighting lamp with such an optical element.

These problems are solved by an optical element as claimed by claim 1 and by a lighting lamp as claimed by claim 11. Further advantageous embodiments are the subject-matter of the dependent claims.

An optical element according to the present invention comprises at least one strip-shaped optical lens, wherein, in a cross section perpendicular to a length direction, the optical lens comprises: a light source setting portion having a central axis, provided for setting the light source; a light incident surface, disposed facing the light source setting portion, wherein incident light rays of the light source comprise small-angle light rays and large-angle light rays; two first total reflection surfaces located opposite to the light incident surface and each disposed on opposite sides of the central axis, wherein the two ends of the two first total reflection surfaces close to the light source setting portion are close to each other and the small-angle light rays emitted to the first total reflection surfaces is totally reflected; two first light emitting surface arranged on either side of the two first total reflection surfaces in a direction perpendicular to the central axis, for emitting reflected light from the first total reflection surfaces on the same side; two second total reflection surfaces located opposite to the light incident surface and each disposed on opposite sides of the central axis, wherein the two second total reflection surfaces are angled outwards so that the large-angle light rays are reflected to the direction of the small-angle light rays; and two second light emitting surfaces, respectively disposed on opposite sides of the central axis and each located between the second total reflection surface and the first light emitting surface on the same side, wherein the second light emitting surfaces are used to emit the reflected light of the second total reflection surface on the same side, and wherein the second total reflection surface and the second light emitting surface on either side of the central axis are connected to form an acute angle.

Thus, an irradiating surface perpendicular to the central axis is provided. For the irradiating surface, if there is no optical lens, the light at the middle position is the strongest and its intensity gradually decreases on both sides. By setting the optical lens in the lighting lamp of the present embodiment, the small-angle light rays that are irradiated to the middle position are totally reflected to both sides and emitted through the first light emitting surface, and the large-angle light rays irradiated to both sides are totally reflected to the middle position by the second total reflection surfaces and emitted via the second light emitting surfaces 106, so as to achieve the goal of uniform illumination. As the second total reflection surface and the second light emitting surface are connected to form or enclose an acute angle, the adjustment of the light path direction of the light source is facilitated and a better uniformity of light can be achieved.

Preferably, in order to facilitate the distribution of light from the light source and more easily complete the distribution of light to achieve the purpose of uniform lighting, the light incident surface further comprises a small-angle light ray incident surface, which is a condenser (concentrating) lens disposed in the middle; and two large-angle light ray incident surfaces, which are light-transmissive surfaces disposed on each side of the central axis and corresponding to the second total reflection surfaces.

In order to facilitate manufacturing, advantageously, the second total reflection surface may each be disposed outside (on the outer side of) the corresponding large-angle light ray incident surface in order to reflect all the large-angle light rays.

In order to facilitate the adjustment of the light path direction of small-angle light rays and achieve better uniformity of light, advantageously, the first total reflection surface is each disposed outside (on the outer side of) the small-angle light ray incident surface in order to reflect all converged small-angle light rays.

In order to facilitate the adjustment of the light path direction of the light source and achieve a better uniformity of light, advantageously, the first total reflection surface and the first light emitting surface on either side of the central axis may be connected to form or enclosed an acute angle.

In order to facilitate the adjustment of the light path direction of the light source and make the light uniformity better, advantageously, the first light emitting surface and the second light emitting surface on either side of the central axis may be connected to form an obtuse angle.

In order to achieve encapsulation and waterproofing, advantageously, the optical element may further comprise a strip-shaped lamp cover (lampshade) disposed outside the optical lens.

In order to achieve a linear light source effect, advantageously, the optical element may further comprise a light diffusion film that stretches light rays emitted from the light source along a length direction of the optical lens.

In order to facilitate manufacturing and achieve a good line light source effect, advantageously, the light diffusion film may be disposed between the optical lens and the strip-shaped lamp cover.

According to the present invention there is also provided a lighting lamp, comprising a lamp holder, printed circuit boards and light sources, wherein the light source is disposed at the light source setting portion.

In order to increase the illumination range, advantageously, the light source may be provided with a plurality of light sources arranged at intervals along the length direction of the printed circuit board.

In the context of energy saving and environmental protection, LED lamps are increasingly used in the field of home lighting and commercial lighting because of their high light emitting efficiency and good light collection performance. Advantageously, LED chips are used as the light source.

### Technical effects of the invention

The optical element and the lighting lamp with the optical element according to the present invention obtains an illumination effect with a wider range of illumination and a more uniform lighting by total reflection of the small-angle light rays in the middle of the light source to both sides, and by total reflection of the large-angle light rays on both sides to the middle.

### BRIEF DESCRIPTION OF THE DRAWINGS

Embodiments of the present invention will be described hereinafter with reference to the accompanying drawings, in which:
FIG. 1 is a schematic diagram of the structure of a lighting lamp of the present invention.
FIG. 2 is a schematic exploded diagram of the structure of a lighting lamp of the present invention.
FIG. 3 is a schematic cross-sectional view of the structure of a lighting lamp of the present invention.
FIG. 4 is a schematic diagram showing the light directions of the lighting lamp of the present invention.
FIG. 5 is a schematic cross-sectional diagram of a lighting lamp according to another embodiment of the present invention.

### DETAILED DESCRIPTION OF THE INVENTION

Hereinafter, specific embodiments of the present invention will be described in further detail with reference to the accompanying drawings. It should be understood that the description of the embodiments of the present invention is not intended to delimit the scope of protection of the present invention to only the embodiments shown in the drawings.

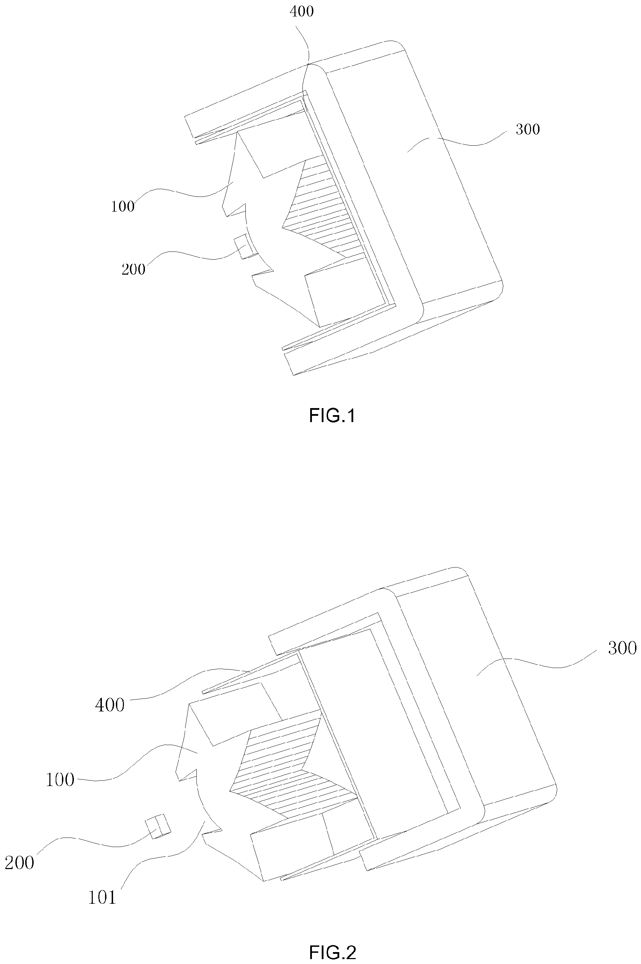

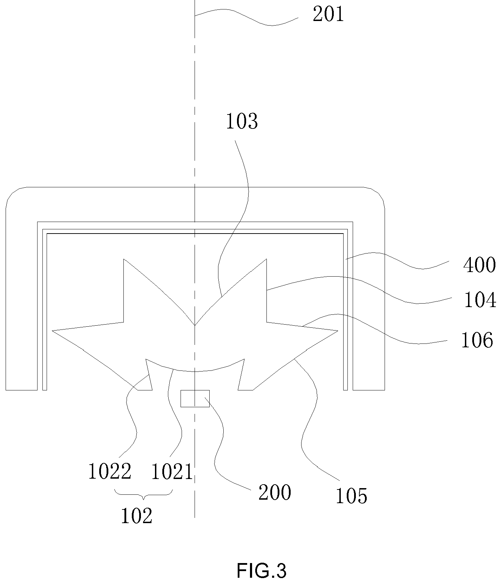

As shown in Figs. 1 to 4, the lighting lamp of the present embodiment includes a lamp holder, a printed circuit board, an optical element, and a light source 200. The lamp holder and the printed circuit board are not the technical points of the present invention and are not shown in the drawings, and the structures in the prior art may be adopted, which will not be described in detail here.

The optical element is used to adjust or properly modify the light emitting (output) direction and the light emitting (output) angle of the light source, to thereby set a proper light distribution as required. The optical element includes at least one strip-shaped optical lens 100. In this embodiment, in order to simplify the structure, only one optical lens 100 is provided. In a cross section perpendicular to the longitudinal direction of the lamp, the optical lens 100 includes a light source setting portion 101, a light incident surface 102, a first total reflection surface 103, a first light emitting (output) surface 104, a second total reflection surface 105, and a second light emitting (output) surface 106.

The light source setting portion 101 is provided for setting the light source 200 having a central axis 201. One light source 200 or more than one light source may be provided, and in the latter case the plurality of light sources may be arranged at intervals along the length direction of the printed circuit board (also the longitudinal direction of the optical lens 100). In the context of energy saving and environmental protection, LED lamps are increasingly used in the field of home lighting and commercial lighting because of their high light emitting efficiency and good light collection performance. Thus, the light source 200 uses LED chips.

The light rays emitted from the light source 200 are divided into small-angle light rays 202 located on the central axis 201 and at both sides thereof, and large-angle light rays 203 located on both sides of the small-angle light rays 202. The actual specific angle value can be set artificially as required.

The light incident surface 102 is disposed facing the light source setting portion 101, and the incident light rays of the light source 200 include small-angle light rays 202 and large-angle light rays 203.

Two first total reflection surfaces 103 are disposed on opposite sides of the light incident surface 102 and are respectively disposed on both sides of the central axis 201. The two ends of the two first total reflection surfaces 103 close to the light source setting portion 101 are close to each other, and are used for total reflection of the small-angle light rays 202 emitted in the direction of the large angle light rays 203. The first total reflection surfaces 103 are disposed on the light path of the small-angle light rays 202. The first total reflection surface 103 may be a plane, but may also be an arc-shaped surface, or a combination of plane surfaces and arc-shaped surfaces. In this embodiment, in order to improve the light distribution effect, the first total reflection surface 103 is formed by a plurality of arc-shaped surfaces.

The two first total reflection surfaces 103 close to each other may be connected with each other or may not be connected with each other. In the case of no connection, there is a gap between the two first total reflection surfaces 103. The gap area allows light to be emitted or not. In the case of connection, the small-angle light rays 202 on both sides of the central axis 201 are totally reflected, so that all the small-angle light rays 202 are reflected to the direction of the large-angle light rays 203. The two first light emitting surfaces 104 are arranged on both sides of the two first total reflection surfaces 103, when viewed in a direction perpendicular to the central axis 201, for emitting reflected light from the first total reflection surfaces 103 on the same side.

The two second total reflection surfaces 105 are located on opposite sides of the light incident surface 102 and are disposed on each side of the central axis 201, The two second total reflection surfaces 105 are set to tilt outwards so that the large-angle light rays 203 are reflected in the direction of the small-angle light rays 202. The second total reflection surfaces 105 are provided on the light path of the large-angle light rays 203.

Two second light emitting surfaces 106 are disposed on each side of the central axis 201 and are respectively located between the second total reflection surface 105 and the first light emitting surface 104 on the same side. The second light emitting surfaces 106 are used to emit the light reflected by the second total reflection surfaces 105 on the same side.

For the illumination surface, if there is no optical lens 100, then the light intensity at the middle position will be the strongest and will gradually decrease to both sides. By setting the optical lens 100 in the lighting lamp of the present embodiment, the small-angle light rays 202 that are irradiated to the middle position are totally reflected to both sides and emitted through the first light emitting surfaces 104, and the large-angle light rays 203 that are irradiated to both sides are totally reflected to the middle position by the second total reflection surfaces 105 and emitted via the second light emitting surfaces 106, to thereby achieve the goal of a uniform illumination.

Due to the change in the size of the optical lens 100 combined with the influence of the distance and area of the irradiating surface, the angle of the first total reflection surfaces 103, of the first light emitting surfaces 104, of the second total reflection surfaces 105 and of the second light emitting surfaces 106 with respect to the irradiating surface can be set as required to achieve the purpose of uniform lighting.

The light incident surface 102 can initially adjust the light to facilitate a more efficient light distribution by the subsequent two sets of total reflection surfaces and further makes the light distribution more uniform. The light incident surface 102 comprises: a small-angle light ray incident surface 1021 and two large-angle light ray incident surface 1022. The small-angle light ray incident surface 1021 is a condenser (concentrating) lens disposed in the middle and the two large-angle light ray incident surfaces 1022 are light-transmissive surfaces respectively disposed on two sides of the central axis 201 and corresponding to the second total reflection surface 105. The small-angle light ray incident surface 1021 is used to limit the angular range of the small-angle light rays. The small-angle light rays incident on surface 1021 converge on the small-angle light ray 202. The first total reflection surface 103 is disposed outside (on the outer side of) the small-angle light ray incident surface 1021 to reflect all the converged small-angle light rays 202.

The second total reflection surface 105 is disposed outside (on the outer side of) the corresponding large-angle light ray incident surface 1022 to reflect all the large-angle light rays 203. The first total reflection surface 103 and the first light emitting surface 104 are connected to form an acute angle. The second total reflection surface 105 and the second light emitting surface 106 are connected to form an acute angle. The first light emitting surface 104 is connected to the second light emitting surface 106 to form an obtuse angle.

The optical element further comprises a strip-shaped lamp cover (lampshade) 300 disposed outside the optical lens 100. The optical element further comprises a light diffusion film 400 that stretches the light emitted from the light source 200 along the length direction of the optical lens 100. The light diffusion film 400 is provided between the optical lens 100 and the strip-shaped lamp cover 300. The light source 200 is provided with a plurality of light sources arranged at intervals along the length direction of the printed circuit board.

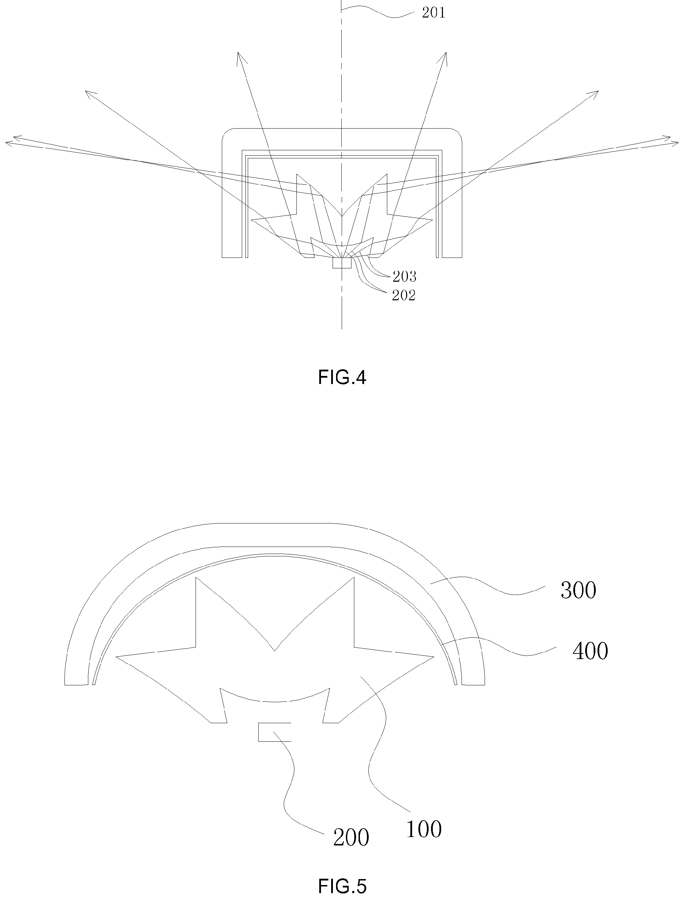

The cross section of the strip-shaped lamp cover 300 may be rectangular, as shown in Figs. 1 to 4, or may be arc-shaped or curved, as shown in Fig. 5, and it can be selected according to the needs of installation and external structure.

In order to facilitate manufacturing and installation, the light diffusion film 400 of the present embodiment is disposed between the optical lens 100 and the strip-shaped lamp cover 300.

The light diffusion film 400 is an elliptical light diffusion film, which can be obtained through purchase. The used model may be E-6010. Of course, other models may also be selected such as E- 1560, E-0160 / 6001, E-0190, as long as the light source 200 is stretched in the direction in which the light source 200 is arranged. In order to achieve a better stretching and diffusion effect, when this light diffusion film is selected, the stretching ratio in both directions may be greater than 4.

The elliptical light diffusion film of the present embodiment is a positive cylindrical microlens array. When used, the length direction of the positive cylindrical microlenses is perpendicular to the arrangement direction of the light sources 200. The strip-shaped convex lens array in the form of a film is small in size, convenient for installation, and can be bent to fit different structural requirements of lamps.

The above disclosure has been described by way of example and in terms of exemplary embodiment, and it is to be understood that the disclosure is not limited thereto.

## Claims

1. An optical element comprising at least one strip-shaped optical lens (100), wherein, in a cross-section perpendicular to a length direction, the optical lens (100) comprises:
a light source setting portion (101), provided for setting the light source (200) with a central axis (201);
a light incident surface (102), disposed facing the light source setting portion (101), wherein incident light rays of the light source (200) comprise small-angle light rays (202) and large-angle light rays (203);
two first total reflection surfaces (103) located opposite to the light incident surface (102) and each disposed on opposite sides of the central axis (201), wherein the two ends of the two first total reflection surfaces (103) close to the light source setting portion (101) are close to each other, for total reflection of the small-angle light rays (202) emitted to the first total reflection surfaces (103);
two first light emitting surfaces (104) arranged on either side of the two first total reflection surfaces (103) in a direction perpendicular to the central axis (201), for emitting reflected light from the first total reflection surfaces (103) on the same side;
two second total reflection surfaces (105) located opposite to the light incident surface (102) and each disposed on opposite sides of the central axis (201), wherein the two second total reflection surfaces (105) are angled outwards for total reflection of the large-angle light rays (203) in the direction of the small-angle light rays (202);
and
two second light emitting surfaces (106) disposed on opposite sides of the central axis (201) and each located between the second total reflection surface (105) and the first light emitting surface (104) on the same side, for emitting reflected light from the second total reflection surface (105) on the same side; wherein
the second total reflection surface (105) and the second light emitting surface (106) on either side of the central axis (201) are connected to form an acute angle.

2. The optical element as claimed in claim 1, wherein the light incident surface (102) comprises
a small-angle light ray incident surface (1021), which is a condenser lens disposed in the middle; and
two large-angle light ray incident surfaces (1022), which are light-transmissive surfaces disposed on each side of the central axis (201) and corresponding to the second total reflection surfaces (105).

3. The optical element as claimed in claim 2, wherein the second total reflection surface (105) is each disposed outside the corresponding large-angle light ray incident surface (1022) to reflect all the large-angle light rays (203).

4. The optical element as claimed in claim 2, wherein the first total reflection surface (103) is each disposed outside the small-angle light ray incident surface (1021) to reflect all converged small-angle light ray (202).

5. The optical element as claimed in any of the preceding claims, wherein the first total reflection surface (103) and the first light emitting surface (104) on either side of the central axis (201) are connected to form an acute angle.

6. The optical element as claimed in any of the preceding claims, wherein the first light emitting surface (104) and the second light emitting surface (106) on either side of the central axis (201) are connected to form an obtuse angle.

7. The optical element as claimed in any of the preceding claims, wherein the optical element further comprises a strip-shaped lamp cover (300) disposed outside the optical lens (100).

8. The optical element as claimed in claim 7, wherein the optical element further comprises a light diffusion film (400) that stretches light rays emitted from the light source (200) along a length direction of the optical lens (100).

9. The optical element as claimed in claim 8, wherein the light diffusion film (400) is disposed between the optical lens (100) and the strip-shaped lamp cover (300).

10. The optical element as claimed in any of the preceding claims, wherein the two first total reflection surfaces (103) close to each other are connected with each other.

11. A lighting lamp, comprising a lamp holder, a printed circuit board and a light source (200), further comprising an optical element as claimed in any of claims 1 to 10, wherein the light source (200) is disposed at the light source setting portion (101).

12. The lighting lamp as claimed in claim 11, wherein the light source (200) has a in plurality of light sources arranged at intervals along the length direction of the printed circuit board.

## Patentansprüche

1. Optisches Element mit mindestens einer streifenförmigen optischen Linse (100), wobei die optische Linse (100) in einem Querschnitt senkrecht zu einer Längsrichtung aufweist
einen Lichtquellen-Einstellabschnitt (101), der zum Einstellen der Lichtquelle (200) vorgesehen ist und eine Mittelachse (201) aufweist;
eine Lichtstrahleintrittsfläche (102), die dem Lichtquellen-Einstellabschnitt (101) gegenüberliegend angeordnet ist, wobei einfallende Lichtstrahlen der Lichtquelle (200) kleinwinklige Lichtstrahlen (202) und großwinklige Lichtstrahlen (203) umfassen
zwei erste Totalreflexionsflächen (103), die der Lichtstrahleintrittsfläche (102) gegenüberliegend angeordnet sind und jeweils auf gegenüberliegenden Seiten der Mittelachse (201) angeordnet sind, wobei die beiden Enden der beiden ersten Totalreflexionsflächen (103) in der Nähe des Lichtquellen-Einstellabschnitts (101) nahe beieinander liegen, zur Totalreflexion der zu den ersten Totalreflexionsflächen (103) hin abgestrahlten kleinwinkligen Lichtstrahlen (202);
zwei erste Lichtemissionsflächen (104), die auf jeder Seite der beiden ersten Totalreflexionsflächen (103) in einer Richtung senkrecht zur Mittelachse (201) angeordnet sind, zum Abstrahlen von reflektiertem Licht von den ersten Totalreflexionsflächen (103) auf derselben Seite;
zwei zweite Totalreflexionsflächen (105), die der Lichtstrahleintrittsfläche (102) gegenüberliegen und jeweils auf gegenüberliegenden Seiten der Mittelachse (201) angeordnet sind, wobei die beiden zweiten Totalreflexionsflächen (105) zur Totalreflexion der großwinkligen Lichtstrahlen (203) in Richtung der kleinwinkligen Lichtstrahlen (202) nach außen gewinkelt sind; und
zwei zweite Lichtemissionsflächen (106), die auf gegenüberliegenden Seiten der Mittelachse (201) angeordnet sind und jeweils zwischen der zweiten Totalreflexionsfläche (105) und der ersten Lichtemissionsfläche (104) auf derselben Seite angeordnet sind, um reflektiertes Licht von der zweiten Totalreflexionsfläche (105) auf derselben Seite abzustrahlen; wobei
die zweite Totalreflexionsfläche (105) und die zweite Lichtemissionsfläche (106) auf beiden Seiten der Mittelachse (201) miteinander verbunden sind, um einen spitzen Winkel auszubilden.

2. Optisches Element nach Anspruch 1, wobei die Lichtstrahleintrittsfläche (102) umfasst
eine kleinwinklige Lichtstrahleintrittsfläche (1021), die eine in der Mitte angeordnete Kondensor- bzw. Sammellinse ist; und
zwei großwinklige Lichtstrahleintrittsflächen (1022), die auf jeder Seite der Mittelachse (201) angeordnete lichtdurchlässige Flächen vorgesehen sind und den zweiten Totalreflexionsflächen (105) zugeordnet sind.

3. Optisches Element nach Anspruch 2, wobei die zweite Totalreflexionsfläche (105) jeweils außerhalb der entsprechenden großwinkligen Lichtstrahleintrittsfläche (1022) angeordnet ist, um alle Großwinkel-Lichtstrahlen (203) zu reflektieren.

4. Optisches Element nach Anspruch 2, wobei die erste Totalreflexionsfläche (103) jeweils außerhalb der kleinwinkligen Lichtstrahleintrittsfläche (1021) angeordnet ist, um sämtliche konvergenten kleinwinkligen Lichtstrahlen (202) zu reflektieren.

5. Optisches Element nach einem der vorhergehenden Ansprüche, wobei die erste Totalreflexionsfläche (103) und die erste Lichtemissionsfläche (104) auf beiden Seiten der Mittelachse (201) unter Bildung eines spitzen Winkels miteinander verbunden sind.

6. Optisches Element nach einem der vorhergehenden Ansprüche, wobei die erste Lichtemissionsfläche (104) und die zweite Lichtemissionsfläche (106) auf beiden Seiten der Mittelachse (201) miteinander verbunden sind, um einen stumpfen Winkel zu bilden.

7. Optisches Element nach einem der vorhergehenden Ansprüche, wobei das optische Element ferner eine streifenförmige Lampenabdeckung (300) umfasst, die außerhalb der optischen Linse (100) angeordnet ist.

8. Optisches Element nach Anspruch 7, wobei das optische Element weiterhin eine Lichtdiffusionsfolie (400) umfasst, die von der Lichtquelle (200) abgestrahlte Lichtstrahlen entlang einer Längsrichtung der optischen Linse (100) verbreitert.

9. Optisches Element nach Anspruch 8, wobei die Lichtdiffusionsfolie (400) zwischen der optischen Linse (100) und der streifenförmigen Lampenabdeckung (300) angeordnet ist.

10. Optisches Element nach einem der vorhergehenden Ansprüche, wobei die beiden nahe beieinander liegenden ersten Totalreflexionsflächen (103) miteinander verbunden sind.

11. Beleuchtungslampe, umfassend eine Lampenfassung, eine Leiterplatte und eine Lichtquelle (200), weiterhin umfassend ein optisches Element nach einem der Ansprüche 1 bis 10, wobei die Lichtquelle (200) bei dem Lichtquellen-Einstellabschnitt (101) angeordnet ist.

12. Beleuchtungslampe nach Anspruch 11, wobei die Lichtquelle (200) eine Vielzahl von Lichtquellen aufweist, die beabstandet zueinander entlang der Längsrichtung der Leiterplatte angeordnet sind.

## Revendications

1. Un élément optique comprenant au moins une lentille optique en forme de bande (100), dans lequel, dans une section transversale perpendiculaire à une direction de longueur, la lentille optique (100) comprend :
une partie pour ajuster la source de lumière (101), prévue pour ajuster la source de lumière (200) et ayant un axe central (201) ;
une surface d'incidence de la lumière (102), disposée face à la partie pour ajuster la source de lumière (101), dans laquelle les rayons lumineux incidents de la source de lumière (200) comprennent des rayons lumineux à petit angle (202) et des rayons lumineux à grand angle (203) ;
deux premières surfaces de réflexion totale (103) situées à l'opposé de la surface d'incidence de la lumière (102) et disposées chacune sur des côtés opposés de l'axe central (201), dans lequel les deux extrémités des deux premières surfaces de réflexion totale (103) proches de la partie pour ajuster la source de lumière (101) sont proches l'une de l'autre, pour une réflexion totale des rayons lumineux à petit angle (202) émis vers les premières surfaces de réflexion totale (103) ;
deux premières surfaces d'émission de lumière (104) disposées de chaque côté des deux premières surfaces de réflexion totale (103) dans une direction perpendiculaire à l'axe central (201), pour émettre la lumière réfléchie par les premières surfaces de réflexion totale (103) du même côté ;
deux secondes surfaces de réflexion totale (105) situées à l'opposé de la surface d'incidence de la lumière (102) et disposées chacune sur des côtés opposés de l'axe central (201), dans lequel les deux secondes surfaces de réflexion totale (105) sont inclinées vers l'extérieur pour une réflexion totale des rayons lumineux à grand angle (203) dans la direction des rayons lumineux à petit angle (202) ; et
deux secondes surfaces d'émission de lumière (106) disposées sur des côtés opposés de l'axe central (201) et situées chacune entre la seconde surface de réflexion totale (105) et la première surface d'émission de lumière (104) sur le même côté, pour émettre la lumière réfléchie par la seconde surface de réflexion totale (105) sur le même côté ; dans lequel
la seconde surface de réflexion totale (105) et la seconde surface d'émission de lumière (106) de chaque côté de l'axe central (201) sont connectées pour former un angle aigu.

2. L'élément optique selon la revendication 1, dans lequel la surface d'incidence de la lumière (102) comprend
une surface d'incidence de rayon lumineux à petit angle (1021), qui est une lentille de condensation disposée au milieu ; et
deux surfaces d'incidence de rayons lumineux à grand angle (1022), qui sont des surfaces de transmission de la lumière disposées de chaque côté de l'axe central (201) et correspondant aux secondes surfaces de réflexion totale (105).

3. L'élément optique selon la revendication 2, dans lequel la seconde surface de réflexion totale (105) est disposée chacune à l'extérieur de la surface d'incidence de rayons lumineux grand angle correspondante (1022) pour réfléchir tous les rayons lumineux grand angle (203).

4. L'élément optique selon la revendication 2, dans lequel la première surface de réflexion totale (103) est disposée à l'extérieur de la surface d'incidence des rayons lumineux aux petits angles (1021) pour réfléchir tous les rayons lumineux aux petits angles convergents (202).

5. L'élément optique selon l'une des revendications précédentes, dans lequel la première surface de réflexion totale (103) et la première surface d'émission de lumière (104) de part et d'autre de l'axe central (201) sont reliées pour former un angle aigu.

6. L'élément optique selon l'une des revendications précédentes, dans lequel la première surface d'émission de lumière (104) et la deuxième surface d'émission de lumière (106) de part et d'autre de l'axe central (201) sont reliées pour former un angle obtus.

7. L'élément optique selon l'une des revendications précédentes, dans lequel l'élément optique comprend en outre un couvercle de lampe en forme de bande (300) disposé à l'extérieur de la lentille optique (100).

8. L'élément optique selon la revendication 7, dans lequel l'élément optique comprend en outre un film de diffusion de la lumière (400) qui étire les rayons lumineux émis par la source lumineuse (200) dans le sens de la longueur de la lentille optique (100).

9. L'élément optique selon la revendication 8, dans lequel le film de diffusion de la lumière (400) est disposé entre la lentille optique (100) et le couvercle de lampe en forme de bande (300).

10. L'élément optique selon l'une quelconque des revendications précédentes, dans lequel les deux premières surfaces de réflexion totale (103) proches l'une de l'autre sont reliées entre elles.

11. Une lampe d'éclairage, comprenant un support de lampe, une carte de circuit imprimé et une source de lumière (200), comprenant en outre un élément optique selon l'une des revendications 1 à 10, dans lequel la source de lumière (200) est disposée au niveau de la partie pour ajuster la source de lumière (101).

12. La lampe d'éclairage selon la revendication 11, dans laquelle la source de lumière (200) comporte une pluralité de sources de lumière disposées à intervalles dans la direction de la longueur de la carte de circuit imprimé.
